**Europäisches Patentamt**

**European Patent Office**

**Office européen des brevets**

(19)

(11) Veröffentlichungsnummer: **0 050 208**
A1

(12) # EUROPÄISCHE PATENTANMELDUNG

(21) Anmeldenummer: **81107056.4**

(22) Anmeldetag: **08.09.81**

(51) Int. Cl.³: **G 05 B 19/10,** H 01 H 25/06, G 04 G 5/04

(30) Priorität: **17.10.80 DE 3039302**

(43) Veröffentlichungstag der Anmeldung: **28.04.82**
**Patentblatt 82/17**

(84) Benannte Vertragsstaaten: **AT CH DE FR GB LI NL SE**

(71) Anmelder: **Bosch-Siemens Hausgeräte GmbH Stuttgart, Patent- und Vertragswesen Hochstrasse 17, D-8000 München 80 (DE)**

(72) Erfinder: **Waigand, Helmut, Dipl.-Ing., Traunstrasse 18d, D-8221 St.Georgen (DE)**

(54) **Anordnung zur Eingabe von Einstellwerten an elektronische Schaltungsanordnungen.**

(57) Das Schaltorgan weist auf eine Mehrzahl von Einstell-positionen mit je einer Kontaktstelle, die dem Eingang einer, einer Zählgrößenordnung zugeordneten Zählstufe einer Zählschaltung zugeordnet ist, und eine Umschalteein-richtung, die gegenläufigen Zählrichtungseingängen der Zählschaltung zugeordnet ist.

EP 0 050 208 A1

0050208

BOSCH-SIEMENS HAUSGERÄTE GMBH                Hochstraße 17, 07.09.1981
Stuttgart                         _ 1 _      8000 München 80


TZP 80/647 E

Anordnung zur Eingabe von Einstellwerten an
elektronische Schaltungsanordnungen

---

Die Erfindung bezieht sich auf eine Anordnung zur Eingabe von
Einstellwerten an elektronische Schaltungsanordnungen unter
Verwendung eines Mehrstufenschalters.

Der Einsatz derartiger Anordnungen in elektronischen Schaltungen ist weitverbreitet möglich. Insbesondere können derartige
Eingabeanordnungen dazu dienen, Sollwert-Stellgrößen zur Steuerung vorgegebener Funktionsabläufe einzugeben. In der Hausgerätetechnik können derartige Sollgrößen erzielbare Werte für
Temperatur oder bestimmte Mengen oder aber insbesondere für
Zeitangaben sein. Insbesondere bei voreinzustellenden Zeitangaben ist die Tatsache zu berücksichtigen, daß sowohl sehr
große Zeitabstände eingestellt werden können sollen als auch
eine hohe Zeiteinstellgenauigkeit erreichbar ist. Bei bekannten
Zeitvoreinstellanordnungen wird deshalb für die Einstellung
der Stunden, der Minuten und der Sekunden je ein Einstellorgan
bereitgestellt, bei dessen Betätigung der jeweilige Zeitwert
aufsteigend weitergezählt wird. Ein Überlauf auf den nächst
höheren Zeitwert ist normalerweise nicht vorgesehen, damit der
Einstellzyklus bei Überschreitung des gewünschten Einstellwertes nicht übermäßig lange andauert. Es ist auch bekannt, einen
Mehrstufenschalter einzusetzen, bei dem jede Einstellstufe einer
Zählgrößenordnung, z.B. einer bestimmten Zeitdimension, zugeordnet ist. Jede Größenordnungsstufe wird auch in diesem Fall zyklisch aufsteigend weitergeschaltet, ohne daß sich aus den bereits erwähnten Gründen die Größenordnungsstufen gegenseitig
beeinflussen. Aufbauend auf diesem Stand der Technik ist es Aufgabe der vorliegenden Erfindung, eine Anordnung bereitzustellen, mit Hilfe derer es ermöglicht wird, elektronisch auswertbare Einstellwerte zum einen auch bei großen Beträgen schnell und zu anderen mit hoher Genauigkeit einzugeben.

Eine Anordnung, die diesen Anforderungen gereicht wird, ist erfindungsgemäß dadurch gekennzeichnet, daß das Eingabeschaltorgan eine Mehrzahl von Einstellpositionen mit je einer Kontaktstelle, die dem Eingang einer einer Zählgrößenordnung zugeordneten Zählstufe einer Zählschaltung zugeordnet ist, und eine Umschaltekontakteinrichtung, die gegenläufigen Zählrichtungseingängen der Zählschaltung zugeordnet sind, aufweist.

Mit einer nach diesen erfindungsgemäßen Merkmalen ausgestatteten Anordnung wird erreicht, daß über ein einziges Schaltorgan, welches also auch nur von einer Hand betätigt zu werden braucht, unterschiedliche Zählstufen einer Zählschaltung ansteuerbar sind, so daß damit unterschiedliche Einstellgeschwindigkeiten und Einstellgenauigkeiten erzielbar sind, und daß andererseits auch mit diesem Eingabeschaltorgan die Zählrichtung der Zählschaltung umsteuerbar ist. Nunmehr ist es auch ohne weiteres möglich, daß sich die Zählstufen der Zählschaltung beim jeweiligen Überlauf gegenseitig beeinflussen. Der Sollwert kann mit entsprechend großen Einstellbeträgen möglichst rasch angesteuert werden, ohne daß es nachteilig ist, wenn dieser Sollwert überschritten wird. In diesem Fall ist es bei Anwendung der erfindungsgemäßen Anordnung nämlich möglich, auch in abfallender Zählrichtung Einstellbeträge einzugeben.

Zur Eingabe von Uhrzeiten ist die erfindungsgemäße Anordnung besonders gut geeignet. In diesem Falle werden drei Einstellpositionen, nämlich je eine für die Stundenangabe, eine für die Minutenangabe und eine für die Sekundenangabe benötigt. Alle Eingabewerte können in aufsteigender Zählrichtung und in abfallender Zählrichtung eingegeben werden, so daß die Eingabeprozedur gegenüber Eingabeprozeduren mit bekannten Anordnungen wesentlich vereinfacht und verkürzt wird.

Nach einer bevorzugten Ausgestaltung ist die erfindungsgemäße Anordnung dadurch gekennzeichnet, daß die Mehrzahl von Einstellpositionen in Drehrichtung und die Umschaltekontakteinrichtung in axialer Richtung des Schaltorgans einstellbar angeordnet sind. Durch die Positionierung in Drehrichtung kann somit ohne Rücksicht auf eine Zunahme oder eine Abnahme des Einstellbetrages die Geschwindigkeit der Einstellwerte gewählt werden, während eine obere axiale Lage des Schaltorgans die nachgeschaltete Zählschaltung in Aufwärtszählrichtung und die untere axiale Lage des Schaltorgans die nachgeschaltete Zählschaltung in Abwärtszählrichtung aktiviert.

Nach einer anderen bevorzugten Ausgestaltung ist die erfindungsgemäße Anordnung dadurch gekennzeichnet, daß das in Drehrichtung einstellbare Eingabeschaltorgan beidseitig einer Mittelstellung auf einer Kreisbahn jeweils eine gleiche Mehrzahl von Kontaktstellen aufweist, wobei im gleichen Abstand von der Mittelstellung angeordnete Kontaktstellen als ein Kontaktpaar einer funktional gemeinsamen Einstellposition jeweils einer Zählstufe der Zählschaltung zugeordnet sind, und daß das in Drehrichtung einstellbare Schaltorgan beidseitig dieser Mittelstellung auf einer weiteren konzentrischen Kreisbahn je eine den der Mehrzahl von Kontaktstellen einer Drehrichtung zugeordnete Kontaktstelle zur Zählrichtungsbestimmung der Zählschaltung aufweist. Bei dieser bevorzugten Ausgestaltung der erfindungsgemäßen Anordnung sind auf der ersten Kreisbahn beidseitig einer Mittelstellung eines in Drehrichtung einstellbaren Eingabeschaltorgans eine gleiche Anzahl von Kontaktstellen angeordnet, wobei sich spiegelbildlich gegenüberstehende Kontaktstellen zu einem Kontaktpaar vereinigt miteinander verbunden sind und gleichermaßen eine zugeordnete Zählstufe der Zählschaltung beeinflußt. Die beiden auf der zweiten Kreisbahn beidseitig der Mittelstellung angeordneten Kontaktstellen dienen der Zählrichtungsbestimmung der Zählschaltung. Durch die Verstellrichtung aus der Mittelstellung wird somit die Zählrichtungsbestimmung der Zählschaltung abgeleitet, während der Verstellbetrag von der Mittelstellung aus ein Kriterium für

die jeweils anzusteuernde Zählstufe der Zählschaltung bestimmt. Im Rahmen dieser bevorzugten Ausgestaltung der erfindungsgemäßen Anordnung ist vorteilhaft, eine das Schaltorgan in die Mittelstellung zurückführende Rückstellfeder anzuordnen. Somit wird vom Schaltorgan die Ausgangsstellung normalerweise eingenommen, aus der heraus der Einstellvorgang durchführbar ist.

Nach einer Weiterbildung ist die erfindungsgemäße Anordnung dadurch gekennzeichnet, daß die Zählschaltung realisiert ist innerhalb eines entsprechend organisierten Mikroprozessors.

Zwei erfindungsgemäß ausgestaltete Ausführungsbeispiele, die in der Zeichnung dargestellt sind, sind im folgenden näher beschrieben. Es zeigt:

Fig. 1 eine sehr vereinfachte Eingabeschaltorganeinrichtung in Verbindung mit einer Mikroprozessorsteuerung,

Fig. 2 eine teilweise geschnittene Seitenansicht des Eingabeschaltorgans

Fig. 3 eine weitere Eingabeschalteinrichtung in Verbindung mit einer Mikroprozessorsteuerung und einer Anzeigeeinheit,

Fig. 4 das Eingabeschaltorgan teilweise geschnitten in einer Seitenansicht und

Fig. 5 eine in diesem Eingabeschaltorgan angeordnete Kontaktscheibe.

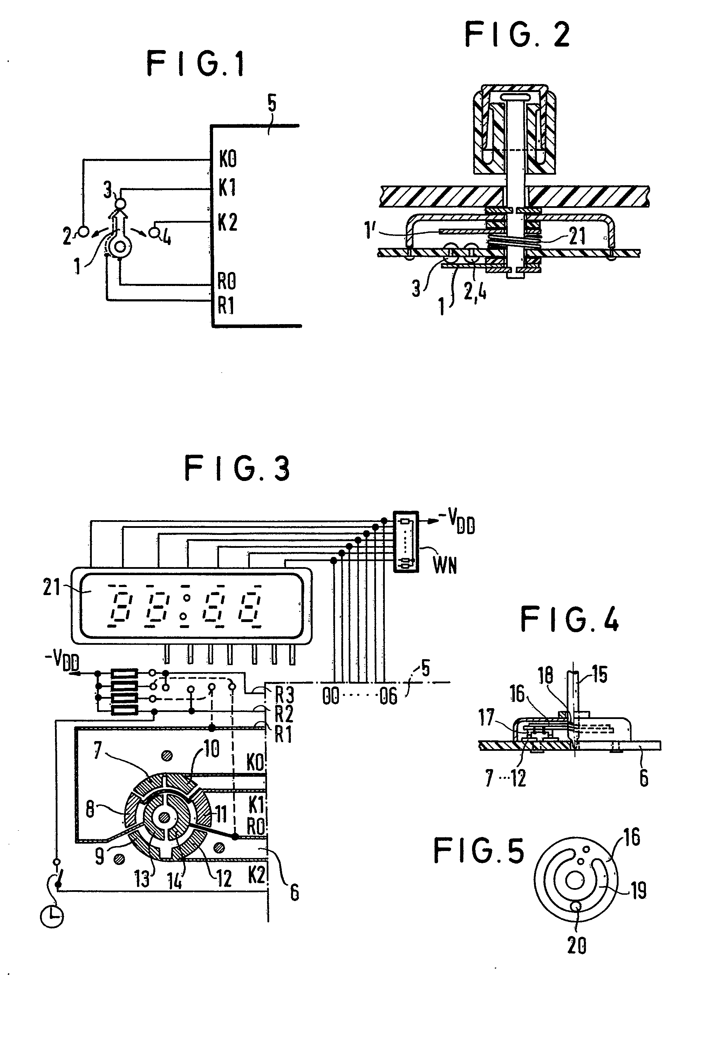

Das Eingabeschaltorgan gemäß Fig. 1 weist in Drehrichtung eines Schalthebels 1 drei Kontaktstellen 2, 3, 4 auf. Jede dieser Kontakthebel ist einem der Eingänge K0, K1, K2 einer Mikroprozessorsteuerschaltung 5 zugeführt. Der Einfachheit halber kann ein Ein-Chip-Mikroprozessor (z.B. TMS 1070) Verwendung finden. Ist die Mikroprozessorsteuerschaltung 5 entsprechend organisiert, so werden je nach Schaltstellung des Kontakthebels 1 über den Schaltkontakt 2 Stundenwerte, über den Kontakt 3 Minutenwerte und über den Kontakt 4 Sekundenwerte als Einstellbeträge durch die Mikroprozessorsteuerung generiert. Von den Ausgängen RO und R1 sind in dem Schaltorgan zwei weitere Kontaktanschlüsse zugeführt und zwar derart, daß in einer oberen Schwenkebene des Kontakthebels 1 der Ausgang RO der Mikroprozessorsteuerung 5 mit einer der Kontaktstellen 2, 3, 4 in Schaltverbindung gebracht wird, während in einer zweiten (unteren) Schwenkebene des Kontakthebels 1, dessen diesbezügliche Lage gestrichelt dargestellt ist, der Ausgang R1 der Mikroprozessorsteuerung 5 mit einer dieser Kontaktstellen 2, 3, 4 in Schaltverbindung gebracht wird. Durch diese ebene Umschaltung des Kontakthebels 1 wird die Zählrichtung des durch die Mikroprozessorsteuerung 5 hindurchgeführten Zählvorganges bestimmt. Ist der Ausgang RO der Mikroprozessorsteuerung 5 über den Kontakthebel 1 an einen der Eingänge KO, K1, K2 durchgeschaltet, so wird in Aufwärtsrichtung gewählt, während die Durchschaltung des Ausganges R1 eine Rückwärtszählung hervorruft.

Auf dem Einstellknopf des Kontakthebels 1 bzw. auf der diesen umgebenden Eingabetableauplatine sind in nicht näher zu erläuternder Weise Einstellsymbole aufgebracht.

Das Eingabeschaltorgan gemäß Figur 2 ist mit zwei über einen Drehknopf verschwenkbare Kontakthebeln 1 und 1' ausgestaltet, die den Kontaktstellen 2, 3, 4 gegenüberstehen.
Belastet durch ein Schraubenfederelement 21 überbrückt der Kontakthebel 1 über einem der Kontaktstellen 2, 3, 4 bei angeschlossener Mikroprozessorschaltung 5 deren Ausgang RO mit einem der Eingänge KO, K1, K2.
Damit wird in der Mikroprozessorschaltung ein Zählvorgang mit zunehmenden Zählwerten ausgelöst. Durch Druck auf den Drehknopf entgegen der Kraft des Schraubenfederelements wird der Kontakthebel 1 von dem Bereich der Kontaktstellen 2, 3, 4 abgehoben und der Kontakthebel 1' in deren Kontaktbereich gebracht.

Dieser Kontakthebel 1' ist dem Ausgang R1 der Mikroprozessorschaltung und damit einem Zählvorgang mit abnehmenden Zählwerten zugeordnet.

Das Eingabeschaltorgan gemäß den Figuren 3 bis 5 ist ein Drehschalter, der aus einer Mittelstellung heraus jeweils drei
Einstellpositionen einnehmen kann. Auf einer Schaltungsplatte
6 sind auf einer Kreisbahn in Form von sechs Kreissegmenten
Kontaktbahnen 7 bis 12 angeordnet. Jeweils zwei dieser Kontaktsegmente und zwar die Kontaktsegmente 7 und 10, 8 und 11, 9 und
12 sind miteinander verbunden und gemeinsam den Dateneingängen
K0, K1, K2 der Mikroprozessorsteuerung 5 zugeführt. Innerhalb
der Kreissegmente 7 bis 12 sind zwei Kreissegmente13, 14 angeordnet, welche den Datenausgängen R0 und R1 der Mikroprozessorsteuerung 5 zugeordnet sind.

Auf einer Welle 15 ist eine Kontaktscheibe 16 mit einem Kontaktschleifer 17 drehfest angeordnet. Somit kann über die Welle 15
der Kontaktschleifer 17 aus einer Mittelstellung heraus, welche
zwischen den Kontaktsegmenten 7 und 10 liegt, in eine der sechs
Kontakteinstellpositionen verschoben werden. Entweder wird dabei das Kontaktsegment 13 mit einem der Kontaktesegmente 7, 8,
9 durch den Schleifer 17 überbrückt oder die Überbrückung erfolgt bei entgegengesetzter Einstell-Lage vom Kontaktsegment 14
zu einem der Kontaktsegmente 10, 11, 12.

Wie im Ausführungsbeispiel nach Fig. 1 wird bei Verwendung
der Anordnung zur Zeiteingabe jedes Kontaktpaar 7, 10 bzw.
8, 11 bzw. 9, 12 einer Zeitdimension nämlich Sekunden, Minuten,
Stunden zugeordnet, während das Kontaktsegment 14 einer Aufwärtsrichtung und das Kontaktsegment 13 einer Abwärtszählrichtung des durch den Mikroprozessor 5 durchzuführenden Zählvorganges zugeordnet ist.

Auf der Welle 15 des Eingabeschaltorganes ist eine Spiralfeder
18 angeordnet, welche die Kontaktscheibe 16 bei Freigabe der
Welle 15 nach einem Einstellvorgang in die Ausgangslage zurückführt. In der Kontaktscheibe 16 ist eine Führungsnut 19 ein-

0050208

gearbeitet, in die ein ortsfest angeordneter Anschlagstift 20 hineinragt. Durch diesen Anschlag wird der Einstelldrehwinkel der Kontaktscheibe 16 begrenzt.

Über die parallelen Datenausgänge 00 bis 06 der Mikroprozessorsteuerung 5 wird eine Segmentanzeigevorrichtung 21 angesteuert, über die der Eingabewert jeweils ablesbar und kontrollierbar ist.

Patentansprüche

1. Anordnung zur Eingabe von Einstellwerten an elektronischen Schaltungsanordnungen unter Verwendung eines Mehrstufenschalters, d a d u r c h g e k e n n z e i c h n e t , daß das Eingabeschaltorgan eine Mehrzahl von Einstellpositionen mit je einer Kontaktstelle (2; 3; 4; 7, 10; 8, 11; 9, 12) die dem Eingang (K0, K1, K2) einer einer Zählgrößenordnung zugeordneten Zählstufe einer Zählschaltung (5) zugeordnet ist, und eine Umschaltekontakteinrichtung, die gegenläufigen Zählrichtungseingängen (R0, R1) der Zählschaltung (5) zugeordnet sind, aufweist.

2. Anordnung nach Anspruch 1, dadurch gekennzeichnet, daß die Mahrzahl von Einstellpositionen (2, 3, 4) und die Umschaltekontakteinrichtung in axialer Richtung des Schaltorgans (1) einstellbar angeordnet sind.

3. Anordnung nach Anspruch 1, dadurch gekennzeichnet, daß das in Drehrichtung einstellbare Schaltorgan (17) beidseitig einer Mittelstellung jeweils einer gleichen Mehrzahl von auf einer Kreisbahn angeordneten Kontaktstellen (7 bis 12) gegenübersteht, wobei im gleichen Abstand von der Mittelstellung angeordnete Kontaktstellen (7 und 10; 8 und 11; 9 und 12) als ein Kontaktpaar einer funktional gemeinsamen Einstellposition jeweils einer Zählstufe (K0, K1, K2) der Zählschaltung (5) zugeordnet sind und daß dem Eingabeschaltorgan (17) auf einer weiteren konzentrischen Kreisbahn je eine der Mehrzahl von Kontaktstellen einer Drehrichtung zugeordnete Kontaktstellen (13, 14) zur Zählrichtungsbestimmung der Zählschaltung (5) gegenübersteht.

4. Anordnung nach Anspruch 3, dadurch gekennzeichnet, daß eine das Schaltorgan (17, 16) in die Mittelstellung zurückführende Rückstellfeder (18) angeordnet ist.

0050208

5. Anordnung nach einem der Ansprüche 1 bis 4, dadurch gekennzeichnet, daß die Zählschaltung (5) realisiert ist innerhalb eines entsprechend organisierten Mikroprozessors.

FIG.1

FIG. 2

FIG.3

FIG.4

FIG.5

Europäisches Patentamt

**EUROPÄISCHER RECHERCHENBERICHT**

0050208

Nummer der Anmeldung

EP 81 10 7056

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>CH - A - 9326/72</u> (CITIZEN WATCH)<br>* Spalte 5, Zeilen 12-68; Spalte 6, Zeilen 1-20 * | 1,3 |
| | -- | |
| | <u>DE - A - 2 826 721</u> (ALPS ELECTRIC)<br>* Seite 4, Absätze 2,3 * | 2,4 |
| | -- | |
| | <u>US - A - 3 834 152</u> (K.K. SUWA SEIKOSHA)<br>* Spalte 6, Zeilen 3-53 *<br>& CH - A - 615 317 | 1,2 |
| | -- | |
| | <u>GB - A - 1 544 035</u> (DIAMOND H.)<br>* Seite 1, Zeilen 9-59 * | 1,5 |
| | -- | |
| | <u>FR - A - 2 335 884</u> (LEONARD C.)<br>* Seite 1, Zeilen 23-34 * | 1 |
| | ---- | |

**KLASSIFIKATION DER ANMELDUNG (Int. Cl.³)**

G 05 B 19/10
H 01 H 25/06
G 04 G  5/04

**RECHERCHIERTE SACHGEBIETE (Int. Cl.³)**

G 04 G  5/04
G 04 C  3/00
G 05 B 19/10
H 01 H 25/06
        1/40

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-01-1982 | LIBBERECHT |

EPA form 1503.1  06.78